# EUROPEAN PATENT SPECIFICATION

(11) **EP 1 498 300 B1**
(45) Date of publication and mention of the grant of the patent: **07.11.2012**
(21) Application number: 03719181.4
(22) Date of filing: 23.04.2003
(51) Int. Cl.: B60N 2/06, B60N 2/07, B60N 2/08, B60N 2/68, B60R 22/26

(54) **VEHICLE REAR SEAT DEVICE**
FAHRZEUGRÜCKSITZVORRICHTUNG
DISPOSITIF DE SIEGE ARRIERE POUR VEHICULE

(30) Priority: 24.04.2002 JP 2002122906
(43) Date of publication of application: 19.01.2005
(73) Proprietor: Johnson Controls Automotive Systems Corporation, Ayase-shi, Kanagawa 252-1121 (JP)
(72) Inventor: Yamanaka, Satsuki, Johnson Controls Aut. Syst. Co, Ayase-shi, Kanagawa 252-1121 (JP)
(74) Representative: Marshall, Caroline
(86) International application number: PCT/JP2003/005177
(87) International publication number: WO 2003/091061

(56) References cited:
- JP-U- 4 016 035
- JP-U- 4 016 035
- JP-U- 4 057 435
- JP-U- 4 069 224
- JP-U- 58 160 831
- JP-U- 58 160 846
- JP-U- 63 088 561
- US-A- 5 485 976

## Description

### TECHNICAL FIELD

This invention relates to a vehicular rear seat unit in which a bench seat for three passengers is mounted on a seat slide device.

### BACKGROUND ART

In a vehicular rear seat unit constructed by mounting a bench seat for three passengers, that is, a bench seat including a seat cushion having a middle seat section and right and left seat sections provided on both right and left sides of the middle seat section with the middle seat section sandwiched therebetween, on a seat slide device having two rails, the respective rails of the seat slide device are installed at positions corresponding to substantially transversely central parts of the right and left seat sections of the seat cushion, and a frame of the seat cushion is fixed to these rails.

The above-described rear seat unit has some problems. For example, the respective rails of the seat slide device are individually installed in the substantially transversely central parts of the one-side and the-other-side seat sections, and accordingly, impair cushioning characteristics of these seat sections, resulting in reduction of comfort of a vehicle.

Moreover, leg members fixing the respective rails of the seat slide device are located in the vicinity of doors, and hinder passengers from getting on and off the vehicle, resulting in reduction of ease in getting on and off the vehicle.

Furthermore, when an impact load is applied to a vehicle body due to a collision of the vehicle, and the like, a load of 800 kg per one seat belt anchor of a passenger's seat belt is applied thereto, that is, a load of four to five tons in total is applied to the bench seat for three passengers with five to six seat belt anchors. In the above-described rear seat unit, points where the respective seat belt anchors are attached to the frame of the bench seat and points where the rails are fixed to the seat slide device are apart from one another. Accordingly, it is necessary to reinforce the bench seat for the impact load endurance, resulting in a complicated frame structure and in a weight increase of the rear seat unit.

US 5, 485, 976 A (corresponding to the preamble of claim 1) describes an aircraft bench seat in which three seat sections are arranged side by side. The bench seat includes a pair of frame members that are located at each side of a middle seat section and so the need to reinforce the seat is reduced. The US 5,485,976 seat, is however, unable to slide relative to the aircraft in which it is installed.

### DISCLOSURE OF THE INVENTION

The present invention is made in the light of the above-described problems. An object of the present invention is to provide a vehicular rear seat unit including a seat belt attachment structure capable of surely restraining passengers, which realizes a simplified frame structure and weight reduction of a seat in addition to an improvement in comfort of a vehicle and ease in getting on and off the vehicle.

In order to achieve the above-described object, the present invention provides a vehicular rear seat unit having the technical features set forth in claim 1. Accordingly, said unit includes a bench seat including a seat cushion with three seat sections arranged side by side, the seat cushion having a pair of frame members provided at positions corresponding to both side portions of the middle seat section; seat belt anchors for the seat sections, the seat belt anchors being attached to the respective frame members; a seat slide device including a pair of movable rails to which the respective frame members are individually fixed, and a pair of fixed rails which slidably support the respective movable rails, the fixed rails being individually fixed to a vehicle body floor with leg members provided therebetween; and a rod bridging between the frame members which is configured to come into contact with the movable rails to prevent the seat cushion from moving downward.

Additional features of the invention are disclosed in the dependent claims.

### BRIEF DESCRIPTION OF DRAWINGS

FIG. 1 is a perspective view of a frame structure of a vehicular rear seat unit according to an embodiment of the present invention, in which a cushion portion covering the frame structure is omitted.
FIG. 2 is a schematic view explaining an arrangement of seat belts of the vehicular rear seat unit of FIG. 1.
FIG. 3 is an exploded perspective view of principal portions of the vehicular rear seat unit of FIG. 1.
FIG. 4 is a cross-sectional view explaining an engaged state of catch brackets of the vehicular rear seat unit of FIG. 1.
FIG. 5 is a schematic view explaining loading directions when an impact load is applied to the vehicular rear seat unit of FIG. 1.
FIG. 6 is an explanatory view of principal portions of another embodiment of the catch brackets.
FIG. 7A is a cross-sectional view showing the catch bracket of FIG. 6 in a normal state.
FIG. 7B is a cross-sectional view showing the catch bracket of FIG. 6 in an engaged state when the impact loads are applied to the vehicular rear seat unit.

### BEST MODE FOR CARRYING OUT THE INVENTION

The present invention is more specifically described by an embodiment shown in the drawings.

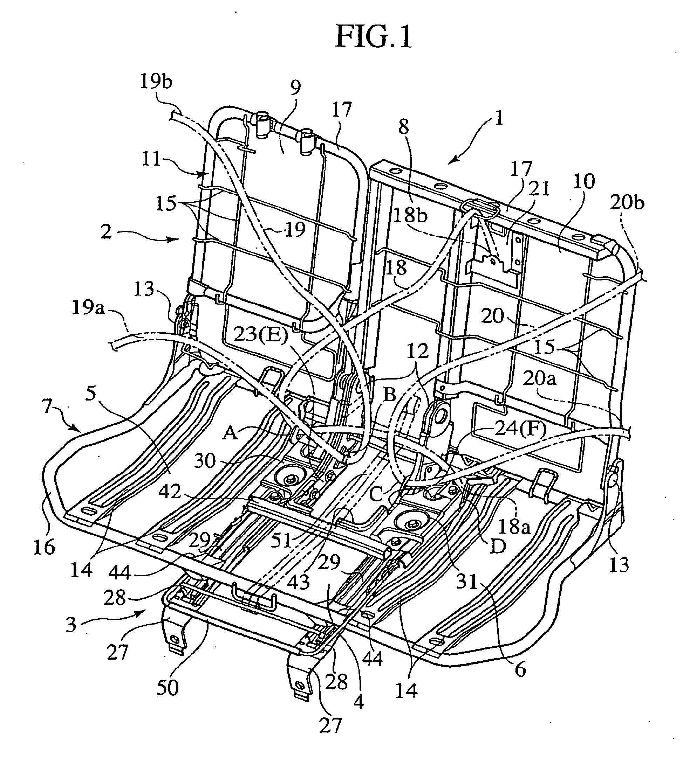

As shown in FIG. 1, a rear seat unit 1 includes a bench seat 2, four seat belts anchors A, B, C and D and a seat slide device 3.

The bench seat 2 includes a seat cushion 7 having a middle seat section 4, and a one-side (right-side) seat section 5 and the-other-side (left-side) seat section 6, which are provided on both right and left sides of the middle seat section 4 with the middle seat section 4 sandwiched therebetween, and includes a seat back 11 having a middle seat back section 8, and a one-side (right-side) seat back section 9 and the-other-side (left-side) seat back section 10, which are provided on both right and left sides of the middle seat back section 8 with the middle seat back section 8 sandwiched therebetween. A frame 17 of the seat back 11 is rotatably joined to a frame 16 of the seat cushion 7 with reclining devices 12 provided therebetween at a transversely central part of the bench seat 2 and with brackets 13 provided therebetween at both transversely outer side portions of the bench seat 2. Bar-like retaining members 14 and rod-like retaining members 15 are provided on the frame 16 of the seat cushion 7 and the frame 17 of the seat back 11, respectively.

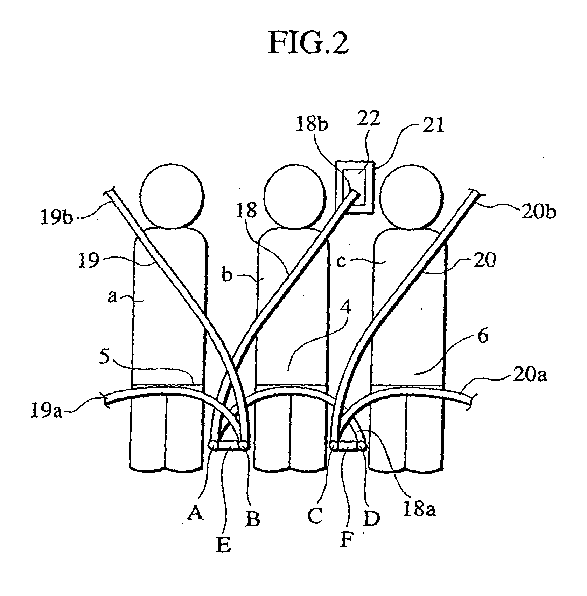

As shown in FIG. 2, the seat belt anchors A, B, C and D are provided in two pairs on center frame members E and F of the seat cushion 7, which are provided at positions corresponding to the both transversely outer side portions of the middle seat section 4. Specifically, the seat belt anchor A for the one side (right side) of the middle seat section 4 and the seat belt anchor B for the one-side seat section 5 are provided on one side (right side) and other side (left side) of the one center frame member E, respectively. On one side (right side) and other side (left side) of the other (left-side) center frame member F, the seat belt anchor C for the other-side seat section 6 and the seat belt anchor D for the other side (left side) of the middle seat section 4 are provided, respectively.

Here, the seat belt anchors A, B and C are buckles with which tongues (not shown) of a passenger b's seat belt 18, a passenger a's seat belt 19 and a passenger c's seat belt 20 are engaged, respectively. Moreover, the seat belt anchor D is an end to which one end 18a of the seat belt 18 is fixed. The other end 18b of the seat belt 18 is taken up by a retractor 22 fixed to an attachment 21 (refer to FIG. 1) of the-other-side seat back section 10 of the seat back 11. One ends 19a and 20a of the seatbelts 19 and 20 are individually fixed to both side sills (not shown) of a vehicle body. The other ends 19b and 20b of the seat belts 19 and 20 are individually taken up by retractors (not shown) fixed to both rear pillars (not shown) of the vehicle body.

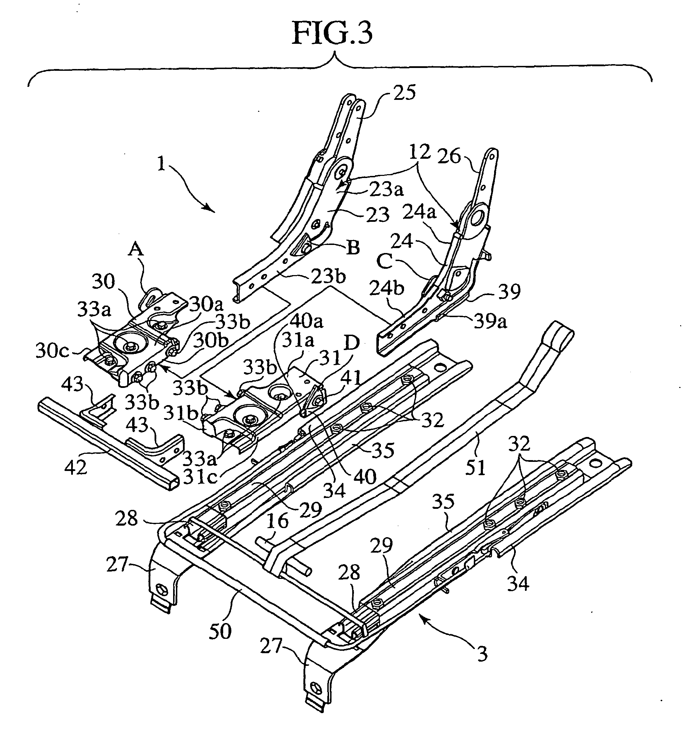

Moreover, as shown in FIG. 3, the center frame members E and F of the bench seat 2 are constituted by two base members 23 and 24, and box brackets 30 and 31 as bracket members for attaching these base members to movable rails 29.

The base member 23 has a substantially L-shape with an erected member 23a and a lower member 23b, and the base member 24 has a substantially L-shape with an erected member 24a and a lower member 24b. Connecting brackets 25 and 26 are attached to the upper ends of the erected members 23a and 24a to be connected to the seat back 11, respectively, with reclining mechanisms (not shown) provided therebetween. The two reclining devices 12 have the erected members 23a and 24a, the reclining mechanisms, and the connecting brackets 25 and 26 (refer to FIG. 3). With regard to the erected members 23a and 24a, rear lower portions thereof are fixed by welding to a rear part of the frame 16 of the seat cushion 7. A front part of the frame 16 of the seat cushion 7 is fixed by welding to the movable rails 29, with brackets 44 provided therebetween (refer to FIG. 1).

As shown in FIG. 3, the box bracket 30 has an upper planer portion 30a, and both sidewalls 30b and 30c extended downward from left and right ends of the planer portion 30a, and has a channel-shape cross section. In a similar way, the box bracket 31 has an upper planer portion 31a, and both sidewalls 31b and 31c extended downward from left and right ends of the planer portion 31a, and has a channel-shape cross section.

The seat slide device 3 has two fixed rails 28 fixed to a vehicle body floor (not shown) with left and right leg members 27 provided therebetween, and the movable rails 29 which are slidably supported on the respective fixed rails 28 and have the base members 23 and 24 fixed thereto, respectively.

The base members 23 and 24 are fixed to the seat slide device 3 with the box brackets 30 and 31 interposed therebetween, respectively. Specifically, the lower member 23b of the base member 23 and the lower member 24b of the base member 24 are fixed by fixing screws 33b to the sidewall 30b of the box bracket 30 and the sidewall 31b of the box bracket 31, respectively. Moreover, the planer portion 30a of the box bracket 30 and the planer portion 31a of the box bracket 31 are fixed to the movable rails 29 by fixing screws 33a individually screwed to screw holes 32 provided in the movable rails 29. On the planer portions 30a and 31a, screw-housing concave portions which individually house heads of the fixing screws 33a are formed.

In this embodiment, as shown in FIG. 3, the seat belt anchor A is fixed to the sidewall 30c of the box bracket 30, the seal belt anchor B is fixed to the lower member 23b of the base member 23, the seat belt anchor C is fixed to the lower member 24b of the base member 24, and the seat belt anchor D is fixed to the sidewall 31c of the box bracket 31. Note that, in FIG. 1 and FIG. 3, reference numerals 50 and 51 denote a lock lever and a lock release belt, respectively.

In the rear seat unit 1 configured in such a way, the bench seat 2 is fixed to the seat slide device 3 with the base members 23 and 24 interposed therebetween, which are provided at the positions corresponding to the both transversely outer side portions of the middle seat section 4 of the seat cushion 7. Accordingly, such structure members involved in fixing the bench seat 2 to the seat slide device 3 can be arranged away from central parts of the respective seat sections 4, 5 and 6. Therefore, good cushioning characteristics of the respective seat sections 4, 5 and 6 are maintained, and comfort of the vehicle is improved.

In addition, the seat slide device 3 can be installed close to the transversely center of the seat cushion 7. Accordingly, the leg members 27 can be arranged away from the vicinities of doors, and thus do not hinder passengers from getting on and off the vehicle when the passengers get on and off the vehicle, whereby ease in getting on and off the vehicle is improved.

Moreover, the seat belt anchors A and B are fixed to the base member 23, and the seat belt anchors C and D are fixed to the base member 24. Furthermore, both of the base members 23 and 24 are directly fixed to the movable rails 29 of the seat slide device 3. Accordingly, impact loads applied to the respective seat belt anchors A, B, C and D are directly transmitted to the vehicle body through the respective base members 23 and 24 and the seat slide device 3, which are highly rigid, without being transmitted through the frame 16 of the seat cushion 7 of the bench seat 2. Thus, an impact-resistant structure of the rear seat unit 1 is easily constructed, thus enabling simplification of the frame structure and weight reduction of the seat. Such transmission of the impact loads to the vehicle body is accurately performed in combination with high rigidities of the base members 23 and 24.

Moreover, in this embodiment, as shown in FIG. 3, on outer and inner edges of the respective leg members 27 in the transverse direction of the seat slide device 3, first catch brackets 34 and 35, each of which forms a groove open downward, are extended in parallel to the movable rails 29. The brackets 35 are formed longer than the brackets 34.

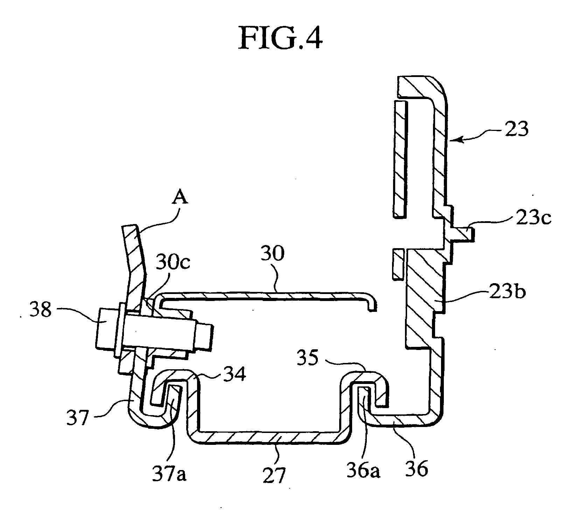

As shown in FIG. 4, from a lower edge of the lower member 23b of the base member 23, which has the channel-shape cross section, a second catch bracket 36 is extended to be engaged with the first catch bracket 35 of the one (right-side) leg member 27 from a transversely inner side of the seat slide device 3. The second catch bracket 36 has an engagement piece 36a formed by bending upward a transversely outer edge thereof. Moreover, in the vicinity of the second catch bracket 36, a protrusion 23c is provided for attachment of the seat belt anchor B to the base member 23. To the outer sidewall 30c of the box bracket 30, a second catch bracket 37 is fastened with a fixing bolt 38 together with the seat belt anchor A. The second catch bracket 37 is engaged with the first bracket 34 of the one leg member 27 from the transversely outer side of the seat slide device 3. The second catch bracket 37 has, in a lower end thereof, an engagement piece 37a formed by bending upward and toward the transversely inner side.

In a similar way, as shown in FIG. 3, in a lower edge 24b of the base member 24, which has the channel-shape cross section, a second catch bracket 39 is provided to be engaged with the first catch bracket 35 of the other (left-side) leg member 27 from the transversely inner side of the seat slide device 3. The second catch bracket 39 has, in a transversely outer edge thereof, an engagement piece 39a formed by bending upward. Moreover, in the vicinity of the second catch bracket 39, a protrusion (not shown) for attachment of the seat belt anchor C to the base member 24 is provided. To the outer sidewall 31c of the box bracket 31, a second catch bracket 40 is fastened with a fixing bolt 41 together with the seat belt anchor D. The second catch bracket 40 is engaged with the first catch bracket 34 of the other leg member 27 from the transversely outer side of the seat slide device 3. The second catch bracket 40 has, in a lower end thereof, an engagement piece 40a formed by bending upward and toward the transversely inner side.

Specifically, in this embodiment, the respective second catch brackets 36, 37, 39 and 40 are provided close to the seat belt anchors B, A, C and D, respectively.

As shown in FIG. 3, a reinforcing rod 42 made of a rectangular cylindrical member is bridged between the left and right base members 23 and 24. To central parts of a rear side face of the reinforcing rod 42, two brackets 43 formed by bending into an L-shape are fixed by welding. The reinforcing rod 42 is fixed to tip ends of the base members 23 and 24 with the two brackets 43 provided therebetween. Specifically, the one (right-side) bracket 43 is put on a transversely outer side of the lower member 23b of the base member 23, and is fixed to the sidewall 30b of the box bracket 30 by the fixing screws 33b. The other (left-side) bracket 43 is put on a transversely outer side of the lower member 24b of the base member 24, and is fixed to the sidewall 31b of the box bracket 31 by the fixing screws 33b (refer to FIG. 1).

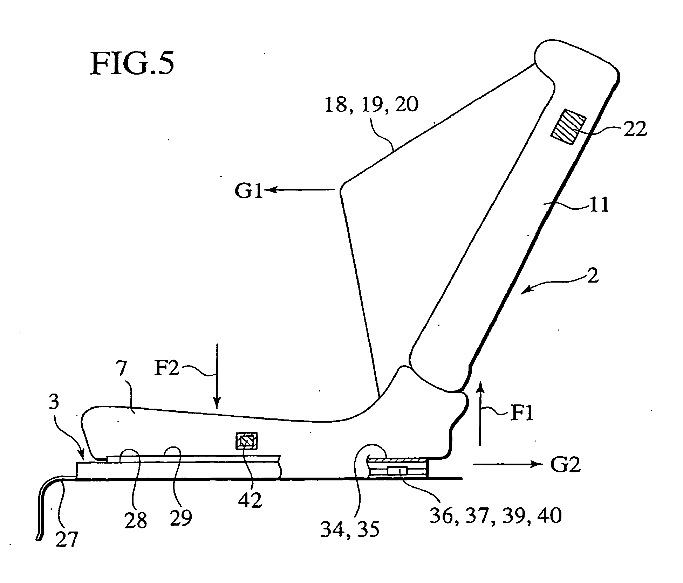

When an impact load is applied to the vehicle body from the front of the vehicle, as shown in FIG. 5, a forward impact load G1 due to inertia of the passengers sitting on the bench seat 2 is applied to the seat belts 18, 19 and 20, and reaction force G2 of the load G1 is exerted on the seat slide device 3 fixing the bench seat 2 to the vehicle body floor. At the same time, in order to cancel a moment caused by a difference in level between points of application of the load G1 and the reaction force G2, an upward load F1 is exerted on a rear side (seat back 11 side) of the seat cushion 7 of the bench seat 2 in a direction where the seat cushion 7 goes up, and a downward load F2 is exerted on a front side of the seat cushion 7 in a direction where the seat cushion 7 goes down.

For the upward load F1, the second catch brackets 36, 37, 39 and 40 are individually engaged with the first catch brackets 34 and 35, and thus the rear of the seat cushion 7 is prevented from moving upward. For the downward load F2, the reinforcing rod 42 comes into contact with upper surfaces of the movable rails 29, and thus the front of the seat cushion 7 is prevented from moving downward. Thus, the passengers are surely restrained.

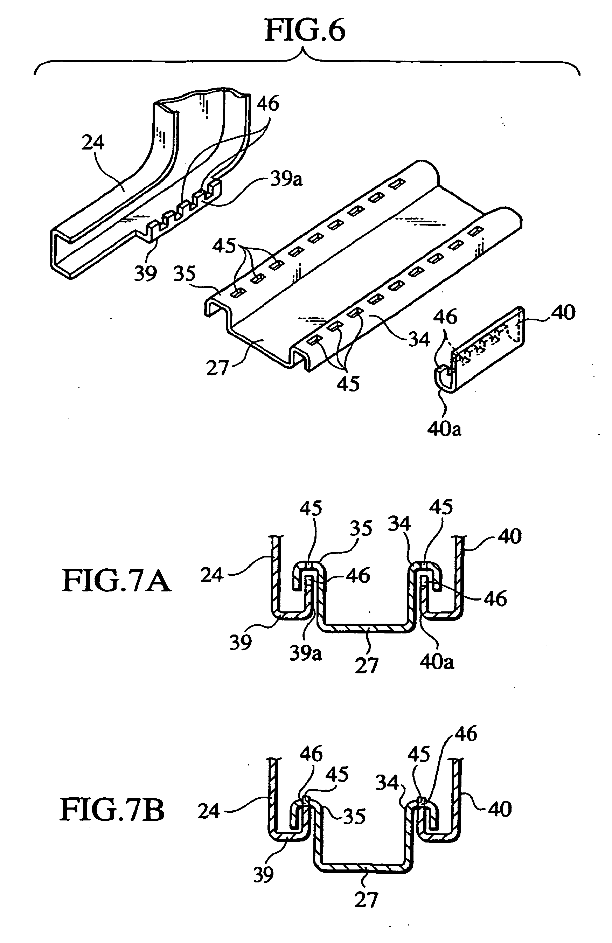

Furthermore, in another embodiment of the first and second catch brackets, as shown in FIG. 6, a plurality of engagement holes 45 are arrayed on tops of the first catch brackets 34 and 35 at an equal interval along the length thereof, and on upper edges of the engagement pieces 39a and 40a of the second catch brackets 39 and 40, a plurality of engagement protrusions 46 are arrayed at the same interval as that of the engagement holes 45 along the length thereof.

In a normal state, as shown in FIG. 7A, with regard to the second catch brackets 39 and 40, tip ends of the engagement protrusions 46 of the engagement pieces 39a and 40a thereof are apart from the first catch brackets 35 and 34. Accordingly, the second catch brackets 39 and 40 are movable relative to the first catch brackets 34 and 35. When the impact load is applied to the vehicle body and the upward load F1 (refer to FIG. 5) is exerted on the rear of the seat cushion 7, as shown in FIG. 7B, the second catch brackets 39 and 40 move upward, and the engagement protrusions 46 are engaged with the engagement holes 45. Thus, the second catch brackets 39 and 40 are prevented from moving relative to the first catch brackets 34 and 35. In a similar way, the other second catch brackets 36 and 37 are also prevented from moving relative to the first catch brackets 34 and 35. Thus, the passengers are further surely restrained.

### INDUSTRIAL APPLICABILITY

As described above, in the vehicular rear seat unit of the present invention, the seat belt anchors are fixed to the center frame members of the seat cushion of the bench seat for three passengers, and the center frame members are fixed to the movable rails of the seat slide device on the vehicle body floor. Thus, the impact loads to the seat belts are transmitted to the vehicle body floor without being transmitted through the seat cushion, and accordingly, it becomes unnecessary to reinforce the seat cushion, thus enabling the simplification of the frame structure and the weight reduction of the seat. Moreover, the rails of the seat slide device are installed close to the center of the seat cushion and away from the central parts of the respective seat sections. Accordingly, the seat slide device does not hinder the passengers from getting on and off the vehicle, or does not impair the cushioning characteristics of the seat sections of the seat cushion. Thus, the comfort of the vehicle and the ease in getting on and off the vehicle are improved.

## Claims

1. A vehicular rear seat unit (1), comprising:
a bench seat (2) comprising a seat cushion (7) with three seat sections (4, 5, 6) arranged side by side, the seat cushion having a pair of frame members (23, 24) provided at positions corresponding to both side portions of a middle seat section (4);
the vehicular rear seat unit (1) being **characterised by**
seat belt anchors (A, B, C, D) for the seat sections (4, 5, 6), the seat belt anchors (A, B, C, D) being attached to the respective frame members (23, 24);
a seat slide device (3) comprising a pair of movable rails (29) to which the respective frame members (23, 24) are individually fixed, and a pair of fixed rails (28) which slidably support the respective movable rails (29), the fixed rails (28) being individually fixed to a vehicle body floor with leg members (27) interposed therebetween 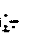 and
a rod (42) bridging between the frame members (23, 24) which is configured to come into contact with the moveable rails (29) to prevent the seat cushion (7) from moving downward.

2. The vehicular rear seat unit (1) according to claim 1, wherein,
each of the leg members (27) is provided on both transversely outer edges thereof with first catch brackets (34, 35), each forming a groove open downward, and
each of the frame members (23, 24) is provided on both transversely outer edges thereof close to the seat belt anchors with second catch brackets (36, 37, 39, 40), each having an engagement piece (36a, 37a, 39a, 40a) to be engaged with the first catch bracket 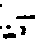

3. The vehicular rear seat unit (1) according to claim 2, wherein,
the first catch bracket (34, 35) is provided on top thereof with a plurality of engagement holes (45) arrayed along the length thereof,
the second catch bracket (36, 37, 39, 40) is provided on tip end of the engagement piece (36a, 37a, 39a, 40a) thereof with a plurality of engagement protrusions (46) formed for engaging with the engagement holes (45), and
the first and second catch brackets (34, 35, 36, 37, 39, 40) are configured such that the engagement protrusions (46) are engaged with the engagement holes (45) to prevent the second catch brackets (36, 37, 39, 40) from moving relative to the first catch brackets (34, 35), as an upward load is exerted on the seat cushion (7).

4. The vehicular rear seat unit (1) according to any one of claims 1 to 3, wherein
the frame members (23, 24) comprises base members constituting reclining devices (12) of the bench seat (2), and bracket members (30, 31) for attaching the base members to the movable rails (29).

## Patentansprüche

1. Fahrzeugrücksitzeinheit (1), Folgendes aufweisend:
eine Sitzbank (2), die ein Sitzkissen (7) mit drei Sitzabschnitten (4, 5, 6), die nebeneinander angeordnet sind, aufweist, wobei das Sitzkissen ein Paar Rahmenelemente (23, 24) hat, die an Positionen bereitgestellt sind, die beiden Seitenabschnitten eines mittleren Sitzabschnittes (4) entsprechen,
wobei die Fahrzeugrücksitzeinheit (1) **gekennzeichnet ist durch**
Sitzgurtanker (A, B, C, D) für die Sitzabschnitte (4, 5, 6), wobei die Sitzgurtanker (A, B, C, D) an den jeweiligen Rahmenelementen (23, 24) befestigt sind;
eine Sitzgleitvorrichtung (3), die ein Paar bewegliche Schienen (29) aufweist, an welchen die jeweiligen Rahmenelemente (23, 24) einzeln befestigt sind, und ein Paar stationäre Schienen (28), die die jeweiligen beweglichen Schienen (29) gleitbar tragen, wobei die stationären Schienen (28) einzeln an einem Fahrzeugkarosserieboden mit Beinelementen (27), die dazwischen eingefügt sind, befestigt sind, und
einen Stab (42) der zwischen den Rahmenelementen (23, 24) überbrückt, der dafür konfiguriert ist, mit den beweglichen Schienen (29) in Berührung zu kommen, um das Sitzkissen (7) daran zu hindern, sich nach unten zu bewegen.

2. Fahrzeugrücksitzeinheit (1) nach Anspruch 1, wobei
jedes der Beinelemente (27) auf beiden äußeren Querkanten davon mit ersten Fangklammern (34, 35) versehen ist, die jeweils eine Hohlkehle bilden, die nach unten offen ist, und
jedes der Beinelemente (23, 24) auf beiden äußeren Querkanten davon in der Nähe der Sitzgurtanker mit zweiten Fangklammern (36, 37, 39, 40) versehen ist, die jeweils einen Eingriffsteil (36a, 37a, 39a, 40a) haben, um in die erste Fangklammer eingefügt zu werden.

3. Fahrzeugrücksitzeinheit (1) nach Anspruch 2, wobei
die erste Fangklammer (34, 35) auf ihrer Oberseite mit einer Vielzahl von Eingriffslöchern (45) versehen ist, die entlang ihrer Länge angeordnet sind,
die zweite Fangklammer (36, 37, 39, 40) auf ihrem Spitzenende des Eingriffsteils (36a, 37a, 39a, 40a) mit einer Vielzahl von Eingriffsvorsprüngen (46) versehen ist, die zum Eingreifen in die Eingriffslöcher (45) ausgebildet sind, und
die erste und zweite Fangklammer (34, 35, 36, 37, 39, 40) derart konfiguriert sind, dass die Eingriffsvorsprünge (46) in die Eingriffslöcher (45) eingefügt werden, um die zweiten Fangklammern (36, 37, 39, 40) daran zu hindern, sich in Bezug zu den ersten Fangklammern (34, 35) zu bewegen, wenn eine Aufwärtsbelastung auf das Sitzkissen (7) ausgeübt wird.

4. Fahrzeugrücksitzeinheit (1) nach einem der Ansprüche 1 bis 3, wobei
die Rahmenelemente (23, 24) Basiselemente aufweisen, die Liegevorrichtungen (12) der Sitzbank (2) bilden, und Klammerelemente (30, 31) zum Befestigen der Basiselemente an den beweglichen Schienen (29).

## Revendications

1. Ensemble de siège arrière pour véhicule (1) comprenant :
- une banquette (2) comprenant un coussin de siège (7) présentant trois sections de sièges (4, 5, 6) agencées côte à côte, le coussin de siège présentant une paire d'éléments d'armature (23, 24) fournis dans une position correspondant aux deux parties latérales d'une section de siège médiane (4) ;
- l'ensemble de siège arrière pour véhicule (1) étant **caractérisé par** :
- des ancrages de ceinture de sécurité (A, B, C, D) pour les sections de siège (4, 5, 6), les ancrages de ceinture de sécurité (A, B, C, D) étant fixés sur les éléments d'armature (23, 24) respectifs ;
- un dispositif de glissière de siège (3) comprenant une paire de rails mobiles (29) sur lesquels sont fixés individuellement les éléments d'armature (23, 24) respectifs, ainsi qu'une paire de rails fixes (28) qui supportent, pour coulisser, les rails mobiles (29) respectifs, les rails fixes (28) étant fixés individuellement au plancher de la carrosserie d'un véhicule par des éléments de piétement (27) intercalés entre ceux-ci ; et
- une tige (42) formant pont entre les éléments d'armature (23, 24) qui est configurée de manière à venir en contact avec les rails mobiles (29) afin d'empêcher le coussin de siège (7) de glisser vers le bas.

2. Ensemble de siège arrière pour véhicule (1) selon la revendication 1, dans lequel,
- chacun des éléments de piétement (27) est muni sur les deux bords transversalement extérieurs de ceux-ci, de premiers tasseaux de blocage (34, 35), chacun formant une rainure ouverte vers le bas, et
- chacun des éléments d'armature (23, 24) est muni, sur les deux bords transversalement extérieurs de ceux-ci, près des ancrages de la ceinture de sécurité, de seconds tasseaux de blocage (36, 37, 39, 40), chacun présentant une pièce d'engagement (36a, 37a, 39a, 40a) prévue pour s'engager dans le premier tasseau de blocage.

3. Ensemble de siège arrière pour véhicule (1) selon la revendication 2, dans lequel
- le premier tasseau de blocage (34, 35) est muni, sur le dessus, d'une pluralité de trous d'engagement (45) disposés sur toute la longueur de celui-ci,
- le second tasseau de blocage (36, 37, 39, 40) est muni, sur le bout de la pièce d'engagement (36a, 37a, 39a, 40a), d'une pluralité de saillies d'engagement (46) formées de manière à s'engager dans les trous d'engagement (45), et
- les premiers et second tasseaux de blocage (34, 35, 36, 37, 39, 40) sont configurés de telle manière que les saillies d'engagement (46) s'engagent dans les trous d'engagement (45) afin d'empêcher les seconds tasseaux de blocage (36, 37, 39, 40) de se déplacer par rapport aux premiers tasseaux de blocage (34, 35), lorsqu'une charge orientée vers le haut est exercée sur le coussin de siège (7).

4. Siège arrière de voiture selon l'une quelconque des revendications 1 à 3, dans lequel
- les éléments de l'armature (23, 24) comprennent des éléments de socle constituant des dispositifs inclinables (12) de la banquette (2) et des éléments supports (30, 31) destinés à la fixation des éléments de socle sur les rails mobiles (29).
